# EUROPEAN PATENT SPECIFICATION

(11) **EP 4 312 492 B1**
(45) Date of publication and mention of the grant of the patent: **06.05.2026**
(21) Application number: 22711632.4
(22) Date of filing: 11.03.2022
(51) Int. Cl.: A01C 7/20

(54) **AGRICULTURAL IMPLEMENTS COMPRISING ADJUSTABLE ROW UNIT BRACKETS WITH LOCKING MECHANISMS, AND RELATED METHODS**
LANDWIRTSCHAFTLICHE GERÄTE MIT VERSTELLBAREN REIHENEINHEITSKLAMMERN MIT VERRIEGELUNGSMECHANISMEN UND ZUGEHÖRIGE VERFAHREN
OUTILS AGRICOLES COMPRENANT DES SUPPORTS DE RAYONNEUR RÉGLABLES DOTÉS DE MÉCANISMES DE VERROUILLAGE, ET PROCÉDÉS ASSOCIÉS

(30) Priority: 30.03.2021 GB 202104509
(43) Date of publication of application: 07.02.2024
(73) Proprietor: Agco do Brasil Solucoes Agricolas LTDA, Sao Paulo, 14030-680 (BR)
(72) Inventor: CUNHA, Venicius Damo, 14030-680 Sao Paulo (BR); MATTER, Jarlis Luiz, 14030-680 Sao Paulo (BR)
(74) Representative: AGCO Intellectual Property Department
(86) International application number: PCT/IB2022/052212
(87) International publication number: WO 2022/208204

(56) References cited:
- EP-A1- 3 400 773
- DE-B1- 3 005 997
- DE-C1- 3 301 087

## Description

### FIELD

Embodiments of the present disclosure relate generally to planters and other agricultural equipment, and in particular, row units that can be adjusted to be at different lateral positions along a toolbar.

### BACKGROUND

Agricultural machines such as planters with a plurality of row units are used to plant seeds upon or in the ground. Planters may have a central portion pulled by a tractor, and may have wings extending from either side. The individual row units, mounted to the center section or to a wing, typically deliver seeds into separate rows. The row units may receive seed from a common central hopper, which may be used to limit the effect of excessive weight on the wings. That is, the center section may be supported by more wheels or larger wheels, and thus may be better able to support the weight of the filled central hopper without exerting excessive pressure on the ground. To increase speed with which fields can be planted, planters are becoming wider and the seed hoppers that feed the row units are becoming larger.

Different crops may be planted with different spacing between rows (which may be referred to in the art as "row spacing" or "row width"). When changing from one crop to another with a different row spacing, row units are physically moved along a toolbar of a planter implement. Some row units are removed entirely from the implement for wider spacing, or added for narrower spacing. Moving row units can be a time-consuming process, and if not performed carefully, can cause damage to the implement and/or the row units, and can lead to spacing errors.

DE 3005 997 B1 discloses a seed drill having coulters arranged in at least two cross rows located one behind the other and mounted in a staggered arrangement. Adjacent sowing coulters are arranged in pairs on a common holder laterally displaceable on a coulter support.

EP 3 400 773 A1 discloses an agricultural implement have a plurality of row units each mounted to a tool bar by a laterally adjustable carrier.

### BRIEF SUMMARY

Aspects of the invention are defined in the independent claims. Optional features are set out in the dependent claims.

### BRIEF DESCRIPTION OF THE DRAWINGS

While the specification concludes with claims particularly pointing out and distinctly claiming what are regarded as embodiments of the present disclosure, various features and advantages of embodiments of the disclosure may be more readily ascertained from the following description of example embodiments of the disclosure when read in conjunction with the accompanying drawings, in which:
FIG. 1 is a simplified top view of a tractor pulling an implement in accordance with one embodiment;
FIG. 2 is a simplified side view of a portion of the implement shown in FIG. 1, including a toolbar, brackets, and a row unit;
FIG. 3 is a simplified perspective view of brackets that may be used in the implement shown in FIG. 1;
FIG. 4 is a simplified perspective view of a spacer sleeve that may be used to lock the brackets of FIG. 3 in place;
FIG. 5 is a simplified perspective view of the brackets of FIG. 3 with the spacer of FIG. 4 installed;
FIG. 6 is a simplified top view of two stationary brackets and two corresponding sliding brackets;
FIG. 7 is a simplified top view of the two stationary brackets and the two corresponding sliding brackets shown in FIG. 6, in which the sliding brackets are in a different position;
FIG. 8 is a simplified perspective view of brackets that may be used in the implement shown in FIG. 1;
FIG. 9 is a simplified perspective view of a locking plate and lateral member of the stationary bracket that may be used to lock the sliding bracket of FIG. 8 in place;
FIG. 10 is a simplified perspective view of brackets that may be used in the implement shown in FIG. 1;
FIG. 11 is a simplified perspective view of a locking pin and lateral member of the stationary bracket that may be used to lock the sliding bracket of FIG. 10 in place;
FIG. 12 is a simplified perspective view of brackets that may be used in the implement shown in FIG. 1;
FIG. 13 is a simplified perspective view of a jaw ring that may be used to lock the sliding bracket of FIG. 12 in place;
FIG. 14 is a simplified perspective view of brackets that may be used in the implement shown in FIG. 1; and
FIG. 15 is a simplified perspective view of brackets and an actuator that may be used in the implement shown in FIG. 1.

### DETAILED DESCRIPTION

The illustrations presented herein are not actual views of any planter or portion thereof, but are merely idealized representations to describe example embodiments of the present disclosure. Additionally, elements common between figures may retain the same numerical designation.

The following description provides specific details of embodiments. However, a person of ordinary skill in the art will understand that the embodiments of the disclosure may be practiced without employing many such specific details. Indeed, the embodiments of the disclosure may be practiced in conjunction with conventional techniques employed in the industry. In addition, the description provided below does not include all elements to form a complete structure or assembly. Only those process acts and structures necessary to understand the embodiments of the disclosure are described in detail below. Additional conventional acts and structures may be used. Also note, the drawings accompanying the application are for illustrative purposes only, and are thus not drawn to scale.

As used herein, the terms "comprising," "including," "containing," "characterized by," and grammatical equivalents thereof are inclusive or open-ended terms that do not exclude additional, unrecited elements or method steps, but also include the more restrictive terms "consisting of" and "consisting essentially of" and grammatical equivalents thereof.

As used herein, the term "may" with respect to a material, structure, feature, or method act indicates that such is contemplated for use in implementation of an embodiment of the disclosure, and such term is used in preference to the more restrictive term "is" so as to avoid any implication that other, compatible materials, structures, features, and methods usable in combination therewith should or must be excluded.

As used herein, the term "configured" refers to a size, shape, material composition, and arrangement of one or more of at least one structure and at least one apparatus facilitating operation of one or more of the structure and the apparatus in a predetermined way.

As used herein, the singular forms following "a," "an," and "the" are intended to include the plural forms as well, unless the context clearly indicates otherwise.

As used herein, the term "and/or" includes any and all combinations of one or more of the associated listed items.

As used herein, spatially relative terms, such as "beneath," "below," "lower," "bottom," "above," "upper," "top," "front," "rear," "left," "right," and the like, may be used for ease of description to describe one element's or feature's relationship to another element(s) or feature(s) as illustrated in the figures. Unless otherwise specified, the spatially relative terms are intended to encompass different orientations of the materials in addition to the orientation depicted in the figures.

As used herein, the term "substantially" in reference to a given parameter, property, or condition means and includes to a degree that one of ordinary skill in the art would understand that the given parameter, property, or condition is met with a degree of variance, such as within acceptable manufacturing tolerances. By way of example, depending on the particular parameter, property, or condition that is substantially met, the parameter, property, or condition may be at least 90.0% met, at least 95.0% met, at least 99.0% met, or even at least 99.9% met.

As used herein, the term "about" used in reference to a given parameter is inclusive of the stated value and has the meaning dictated by the context (e.g., it includes the degree of error associated with measurement of the given parameter).

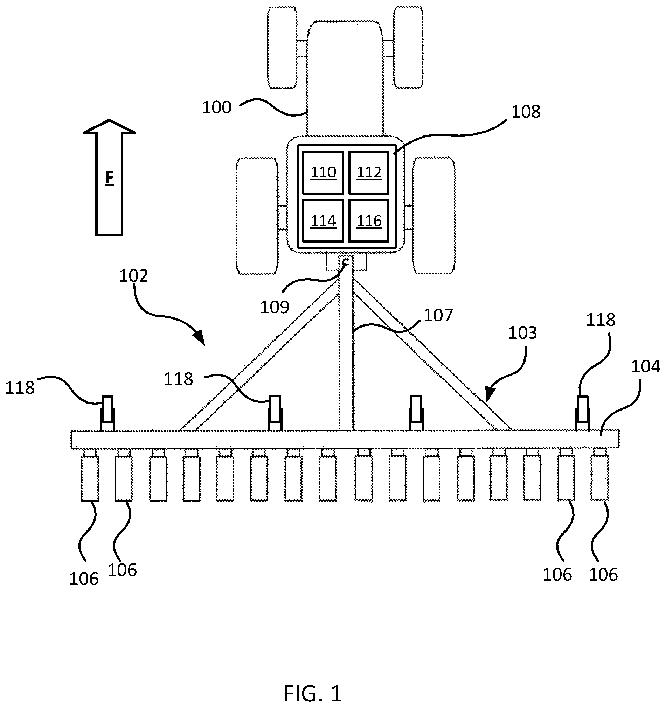

FIG. 1 illustrates a tractor 100 drawing an agricultural implement 102 in a forward direction F. The implement 102 has a frame 103 including a toolbar 104 supporting row units 106. A computer 108, which may include a central processing unit ("CPU") 110, memory 112, implement controller 114, and graphical user interface ("GUI") (e.g., a touch-screen interface), is typically located in the cab of the tractor 100. A global positioning system ("GPS") receiver 116 may be mounted to the tractor 100 and connected to communicate with the computer 108. The computer 108 may include an implement controller 114 configured to communicate with the row units 106 and/or the GPS receiver 116, such as by wired or wireless communication. The implement 102 may be supported in the field by at least one wheel 118 coupled to the toolbar 104. The toolbar 104 may be attached to wheels 118, such as to four wheels 118 as shown in FIG. 1.

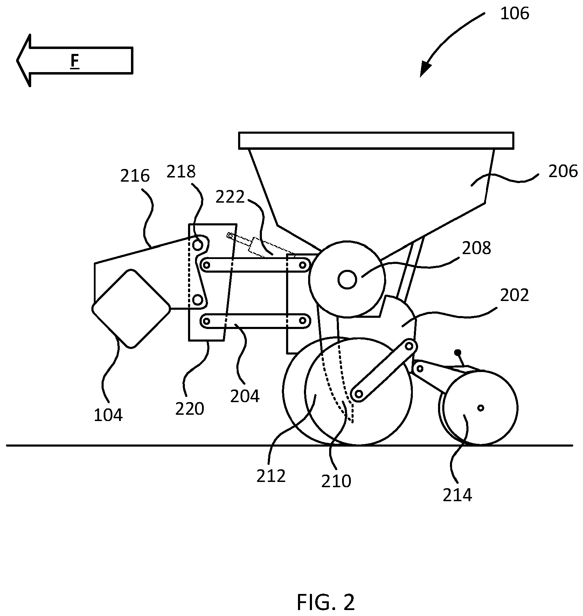

FIG. 2 is a simplified side view illustrating a row unit 106 carried by the toolbar 104. The row unit 106 is shown in the form of a planter row unit, but the row units 106 may be any type of ground-engaging device for planting, seeding, fertilizing, tilling, or otherwise working crops or soil. The row units 106 are spaced apart from one another, typically at a uniform distance from adjacent row units 106. The row unit 106 has a body 202 operably supporting one or more hoppers 206, a seed meter 208, a seed delivery mechanism 210, a seed trench opening assembly 212, a trench closing assembly 214, and any other components as known in the art. The body 202 may be a unitary member, or may include one or more members coupled together (e.g., by bolts, welds, etc.). The row unit 106 shown in FIG. 2 may optionally be a part of a central fill planter, in which case the hoppers 206 may be one or more mini-hoppers fed by a central hopper carried by the implement 102.

The toolbar 104 carries a plurality of stationary brackets 216 that are fixed relative to the toolbar 104. Each stationary bracket 216 has at least one lateral member 218 oriented parallel to the toolbar 104. For example, the lateral member(s) may be circular rods, angle iron, I-beams, square beams, or any other type of linear guide to facilitate sliding. FIG. 2 depicts the lateral members 218 as two parallel cylindrical rods.

A sliding bracket 220 is carried by and configured to slide along the lateral member(s) 218. Each row unit 106 is coupled to a sliding bracket 220, typically by a parallel linkage 204 in combination with an actuator 222 (e.g., a hydraulic or pneumatic actuator) or a spring, which applies a downward force of the row unit 106 on the soil, and enables the row unit 106 to move vertically independent of the toolbar 104.

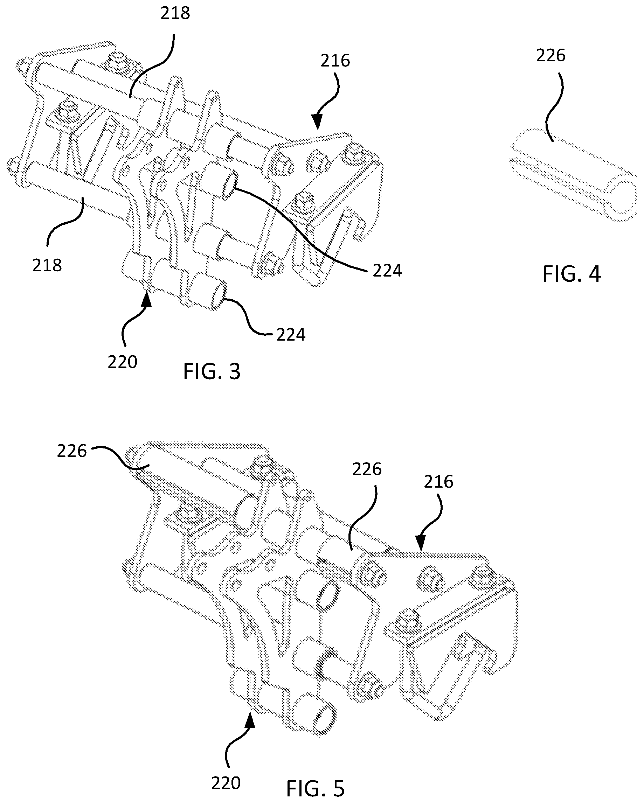

FIG. 3 is a simplified perspective view of a stationary bracket 216 and a corresponding sliding bracket 220. The sliding bracket 220 may move laterally along the lateral member(s) 218 to change the position of the row unit 106 (FIG. 2) relative to the toolbar 104. The sliding bracket 220 may also include connection points 224 for the parallel linkage 204 shown in FIG. 2.

A locking mechanism may be used to secure the sliding bracket 220 at a selected position. FIG. 4 illustrates one such locking mechanism in the form of a spacer sleeve 226. As shown in FIG. 5, the spacer sleeve 226 may be placed along one or more of the lateral member(s) 218 to prevent the sliding bracket 220 from sliding. Furthermore, spacer sleeves 226 may be placed on opposite sides of the sliding bracket 220, and may be of any selected length. As will be appreciated, the spacer sleeves 226 may be removed, the sliding bracket 220 may slide to the left, and the spacer sleeves 226 may be reinstalled in the opposite position from that shown in FIG. 5. Furthermore, the spacer sleeves 226 shown may be replaced with spacer sleeve(s) 226 of different lengths to yield a different position of the sliding bracket 220 (and thus, of the corresponding row unit 106).

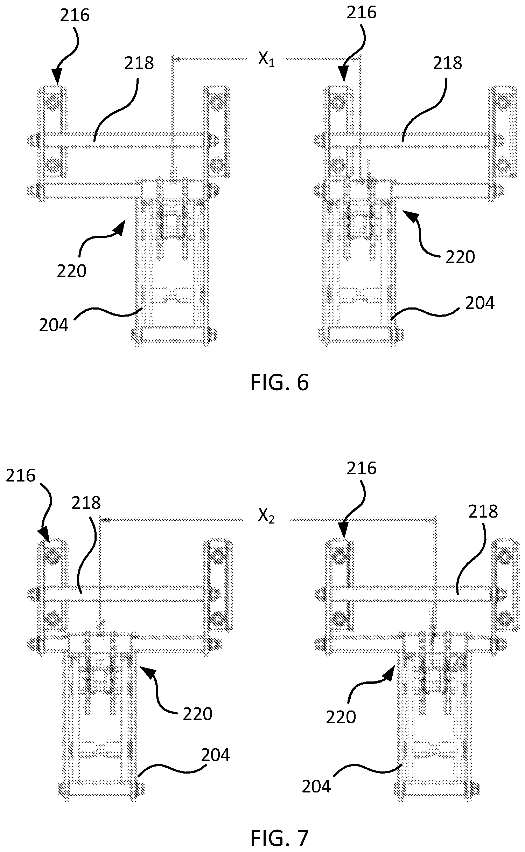

FIGS. 6 and 7 are simplified top views of two stationary brackets 216 and two corresponding sliding brackets 220. The toolbar 104 and row units 102 are omitted from FIGS. 6 and 7 for clarity, though as depicted in FIG. 2, the stationary brackets 216 may be securely mounted to the toolbar 104. In FIG. 6, the two sliding brackets 220 have a center-to center distance between them of X₁. In FIG. 7, the two sliding brackets 220 have a center-to center distance between them of X₂, which is greater than X₁. For example, the distance X₁ in FIG. 6 may be about 450 mm (about 17.7 inches), and the distance X₂ in FIG. 7 may be about 800 mm (about 31.5 inches). Any other separation between adjacent sliding brackets 220 (and therefore between row units 102) may be selected by sliding the sliding brackets 220 laterally along the stationary brackets 216, parallel to the toolbar 104. In some embodiments, some sliding brackets 220 may be removed entirely to select wider spacing, or multiple sliding brackets 220 may be secured to a single stationary bracket 216 to select narrower spacing.

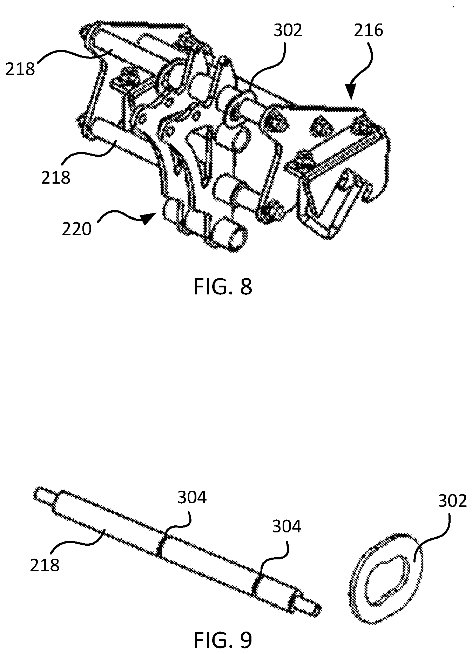

FIGS. 8 and 9 illustrate another locking mechanism that may be used to secure the sliding bracket 220 along the stationary bracket 216. One or more locking plates 302 or locking clips may be disposed within locking channels 304 of the lateral member 218 on one or both sides of the sliding bracket 220. FIG. 9 illustrates the lateral member 218 and locking plates 302 separated from the stationary bracket 216. Locking channels 304 may be cut or otherwise formed at various locations along the lateral member 218 to correspond to row unit spacing that may be selected.

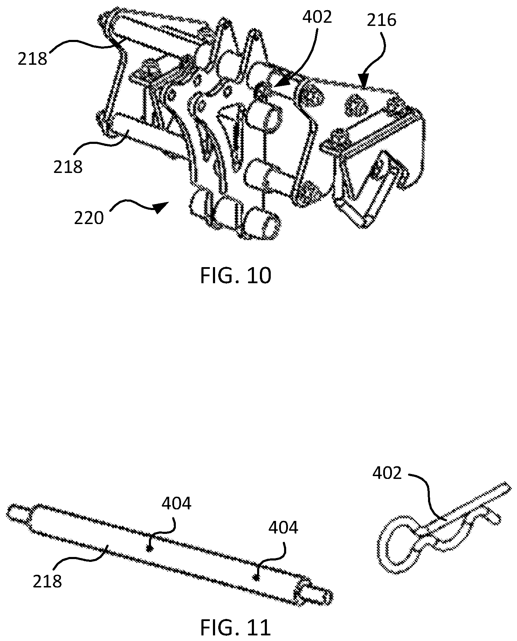

FIGS. 10 and 11 illustrate another locking mechanism that may be used to secure the sliding bracket 220 along the stationary bracket 216. One or more locking pins 402 may be disposed within corresponding locking holes 404 the lateral member 218 on one or both sides of the sliding bracket 220. FIG. 11 illustrates the lateral member 218 and locking pins 402 separated from the stationary bracket 216. Locking holes 404 may be drilled or otherwise formed at various locations along the lateral member 218 to correspond to selected row unit spacing.

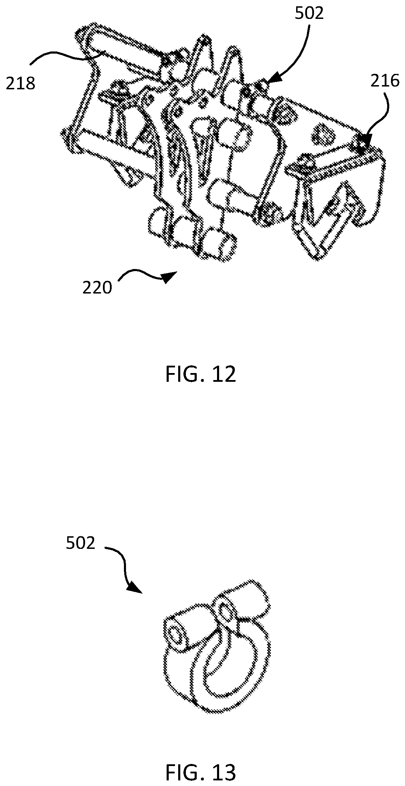

FIGS. 12 and 13 illustrate another locking mechanism that may be used to secure the sliding bracket 220 along the stationary bracket 216. One or more jaw rings 502 may be disposed around the lateral member 218 on one or both sides of the sliding bracket 220. FIG. 13 illustrates a jaw ring 502 separated from the stationary bracket 216. The jaw ring(s) 502 may be secured at any point along the lateral member 218, enabling fine adjustment of the row spacing. The jaw ring(s) 502 may be tightened by screws.

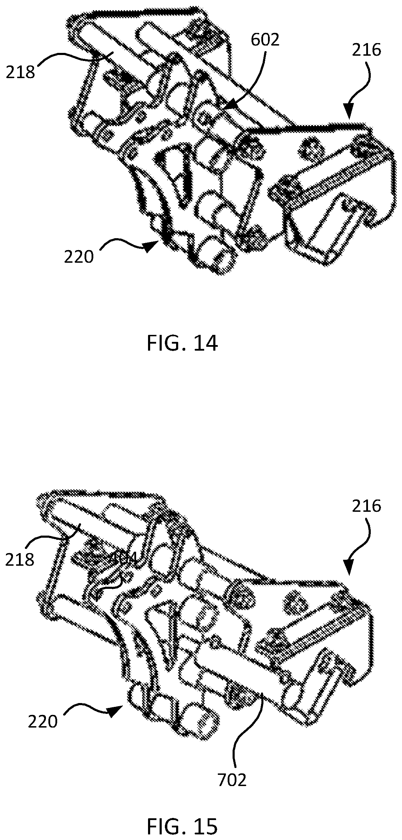

FIG. 14 illustrates another locking mechanism that may be used to secure the sliding bracket 220 along the stationary bracket 216. One or more screws 602 may be disposed within a threaded hole in the sliding bracket 220 such that the screw(s) 602 push against the lateral member 218. Friction between the screw(s) 602 and the lateral member 218 may keep the sliding bracket 220 in place. The screw(s) 602 may be secured at any point along the lateral member 218, enabling fine adjustment of the row spacing.

FIG. 15 illustrates another locking mechanism that may be used to secure the sliding bracket 220 along the lateral member 218. One or more actuators 702 may be coupled to the sliding bracket 220 such that the actuator 702 controls the location of the sliding bracket 220 along the stationary bracket 216. The actuator 702 may be hydraulic, pneumatic, electric, etc., and may include control lines to enable the computer 108 (FIG. 1) to change the row spacing. Such an actuator 702 may move the sliding bracket 220 to any point along the lateral member 218, enabling fine adjustment of the row spacing.

The stationary brackets 216 and sliding brackets 220 described herein may be used to simply change the row spacing of the implement 102 by sliding the sliding brackets 220 to different positions, and by optionally adding or removing some sliding brackets 220. Movement of the sliding brackets 220 may be performed more quickly, more precisely, and with less damage to the implement 102 in comparison with conventional implements. In some embodiments, the changing of the row spacing may be automated. The stationary brackets 216 be mounted to any selected location along the toolbar 104, which enables a wide range of row spacings.

While the present disclosure has been described herein with respect to certain illustrated embodiments, those of ordinary skill in the art will recognize and appreciate that it is not so limited. The scope of the invention is defined by the appended claims.

## Claims

1. An agricultural implement (102), comprising:
a toolbar (104);
a plurality of stationary brackets (216) fixed to the toolbar, each stationary bracket comprising at least one lateral member (218) oriented parallel to the toolbar;
a plurality of row units (106), each row unit coupled to a sliding bracket (220), wherein each sliding bracket is carried by and configured to slide along the at least one lateral member (118) of a corresponding stationary bracket; and
a plurality of locking mechanisms (226; 302, 304; 402, 404; 502; 602; 702), wherein each locking mechanism is configured to fix a position of a corresponding one of the sliding brackets relative to the corresponding stationary bracket;
**characterized by** a plurality of actuators (702), each configured to move a respective one of the sliding brackets (220) relative to the corresponding stationary bracket (216).

2. The agricultural implement (102) of claim 1, wherein the at least one lateral member (218) comprises at least one member selected from the group consisting of a cylindrical rod, angle iron, an I-beam, and a square beam.

3. The agricultural implement (102) of claim 2, wherein the at least one lateral member (218) comprises at least one cylindrical rod.

4. The agricultural implement (102) of claim 1, wherein the at least one lateral member (218) comprises at least two parallel lateral members.

5. The agricultural implement (102) of any one of claim 1 through claim 4, wherein the plurality of locking mechanisms comprises a plurality of spacer sleeves (226).

6. The agricultural implement (102) of any one of claim 1 through claim 4, wherein the plurality of locking mechanisms comprises a plurality of locking plates (302) configured to be disposed within locking channels (304) defined by the at least one lateral member (218).

7. The agricultural implement (102) of any one of claim 1 through claim 4, wherein the plurality of locking mechanisms comprises a plurality of locking pins (402) configured to be disposed within locking holes (404) defined by the at least one lateral member (218).

8. The agricultural implement (102) of any one of claim 1 through claim 4, wherein the plurality of locking mechanisms comprises a plurality of jaw rings (502) configured to be disposed around the at least one lateral member (218).

9. The agricultural implement (102) of any one of claim 1 through claim 4, wherein the plurality of locking mechanisms comprises a plurality of locking screws (602) configured to push the row unit (106) away from the at least one lateral member (218).

10. The agricultural implement (102) of any one of claim 1 through claim 4, wherein the plurality of locking mechanisms comprises the plurality of actuators (702).

11. A method of adjusting a spacing between row units (106) of an agricultural implement (102), the method comprising:
disengaging a locking mechanism (226; 302, 304; 402, 404; 502; 602; 702) to enable a sliding bracket (220) carrying a row unit (106) to travel laterally along a stationary bracket (216) carried by a toolbar (104) of the agricultural implement;
sliding the sliding bracket (220) laterally parallel to the toolbar (104) of the agricultural implement; and
engaging the locking mechanism (226; 302, 304; 402, 404; 502; 602; 702) to fix a position of the sliding bracket relative to the stationary bracket;
**characterized in that** the step of sliding the sliding bracket (220) laterally parallel to the toolbar (104) of the agricultural implement comprises operating an actuator (702) to move the sliding bracket (220).

12. The method of claim 11, wherein engaging the locking mechanism (226; 302, 304; 402, 404; 502; 702) comprises providing an interfering object to limit movement of the sliding bracket.

13. The method of claim 12, wherein providing an interfering object comprises providing a spacer sleeve (226) over a lateral member (218) of the stationary bracket (216).

14. The method of claim 12, wherein providing an interfering object comprises disposing a locking plate (302) partially within a channel (304) defined by a lateral member (218) of the stationary bracket (216).

15. The method of claim 11, wherein engaging the locking mechanism comprises threading a screw (602) into a hole in the sliding bracket.

16. The method of any one of claim 11 through claim 15, further comprising removing a second sliding bracket (220) from a second stationary bracket (216), the second sliding bracket carrying a second row unit (106).

17. The method of any one of claim 11 through claim 15, further comprising adjusting a height of the row unit (106) after engaging the locking mechanism (226; 302, 304; 402, 404; 502; 602; 702).

## Patentansprüche

1. Landwirtschaftliches Gerät (102), das Folgendes umfasst:
einen Werkzeugträger (104);
mehrere stationäre Halterungen (216), die an dem Werkzeugträger befestigt sind, wobei jede stationäre Halterung mindestens ein seitliches Element (218), das parallel zu dem Werkzeugträger ausgerichtet ist, umfasst;
mehrere Reiheneinheiten (106), wobei jede Reiheneinheit mit einer verschiebbaren Halterung (220) gekoppelt ist, wobei jede verschiebbare Halterung von dem mindestens einen seitlichen Bauelement (118) einer entsprechenden stationären Halterung getragen wird und dazu ausgelegt ist, entlang dieses mindestens einen seitlichen Bauelements verschoben zu werden; und
mehrere Verriegelungsmechanismen (226; 302, 304; 402, 404; 502; 602; 702), wobei jeder Verriegelungsmechanismus dazu ausgelegt ist, eine entsprechende der verschiebbaren Halterungen relativ zu der entsprechenden stationären Halterung in ihrer Stellung zu arretieren;
**gekennzeichnet durch** mehrere Aktoren (702), die je dazu ausgelegt sind, eine jeweilige der verschiebbaren Halterungen (220) relativ zu der entsprechenden stationären Halterung (216) zu bewegen.

2. Landwirtschaftliches Gerät (102) nach Anspruch 1, wobei das mindestens eine seitliche Bauelement (218) mindestens ein Bauelement umfasst, das aus der Gruppe ausgewählt ist, die aus einer zylindrischen Stange, einem Winkeleisen, einem I-Träger und einem quadratischen Träger besteht.

3. Landwirtschaftliches Gerät (102) nach Anspruch 2, wobei das mindestens eine seitliche Bauelement (218) mindestens eine zylindrische Stange umfasst.

4. Landwirtschaftliches Gerät (102) nach Anspruch 1, wobei das mindestens eine seitliche Bauelement (218) mindestens zwei parallele seitliche Bauelemente umfasst.

5. Landwirtschaftliches Gerät (102) nach einem der Ansprüche 1 bis 4, wobei die mehreren Verriegelungsmechanismen mehrere Abstandshülsen (226) umfassen.

6. Landwirtschaftliches Gerät (102) nach einem der Ansprüche 1 bis 4, wobei die mehreren Verriegelungsmechanismen mehrere Verriegelungsplatten (302) umfassen, die dazu ausgelegt sind, innerhalb von durch das mindestens eine seitliche Bauelement (218) definierten Verriegelungskanälen (304) angeordnet zu sein.

7. Landwirtschaftliches Gerät (102) nach einem der Ansprüche 1 bis 4, wobei die mehreren Verriegelungsmechanismen mehrere Verriegelungsstifte (402) umfassen, die dazu ausgelegt sind, innerhalb von durch das mindestens eine seitliche Bauelement (218) definierten Verriegelungslöchern (404) angeordnet zu sein.

8. Landwirtschaftliches Gerät (102) nach einem der Ansprüche 1 bis 4, wobei die mehreren Verriegelungsmechanismen mehrere Backenringe (502) umfassen, die dazu ausgelegt sind, um das mindestens eine seitliche Bauelement (218) herum angeordnet zu sein.

9. Landwirtschaftliches Gerät (102) nach einem der Ansprüche 1 bis 4, wobei die mehreren Verriegelungsmechanismen mehrere Verriegelungsschrauben (602) umfassen, die dazu ausgelegt sind, die Reiheneinheit (106) von dem mindestens einen seitlichen Bauelement (218) wegzudrücken.

10. Landwirtschaftliches Gerät (102) nach einem der Ansprüche 1 bis 4, wobei die mehreren Verriegelungsmechanismen die mehreren Aktoren (702) umfassen.

11. Verfahren zum Anpassen eines Abstands zwischen Reiheneinheiten (106) eines landwirtschaftlichen Geräts (102), wobei das Verfahren Folgendes umfasst:
Außer-Eingriff-Bringen eines Verriegelungsmechanismus (226; 302, 304; 402, 404; 502; 602; 702), um zu ermöglichen, dass sich eine verschiebbare Halterung (220), die eine Reiheneinheit (106) trägt, seitlich entlang einer von einem Werkzeugträger (104) des landwirtschaftlichen Geräts getragenen stationären Halterung (216) bewegt;
Verschieben der verschiebbaren Halterung (220) seitlich parallel zu dem Werkzeugträger (104) des landwirtschaftlichen Geräts; und
In-Eingriff-Bringen des Verriegelungsmechanismus (226; 302, 304; 402, 404; 502; 602; 702), um die verschiebbare Halterung relativ zu der stationären Halterung in ihrer Stellung zu arretieren;
**dadurch gekennzeichnet, dass** der Schritt des Verschiebens der verschiebbaren Halterung (220) seitlich parallel zu dem Werkzeugträger (104) des landwirtschaftlichen Geräts das Betätigen eines Aktors (702) umfasst, um die verschiebbare Halterung (220) zu bewegen.

12. Verfahren nach Anspruch 11, wobei das In-Eingriff-Bringen des Verriegelungsmechanismus (226; 302, 304; 402, 404; 502; 702) das Bereitstellen eines Störobjekts umfasst, um die Bewegung der verschiebbaren Halterung zu begrenzen.

13. Verfahren nach Anspruch 12, wobei das Bereitstellen eines Störobjekts das Bereitstellen einer Abstandshülse (226) über einem seitlichen Bauelement (218) der stationären Halterung (216) umfasst.

14. Verfahren nach Anspruch 12, wobei das Bereitstellen eines Störobjekts das Anordnen einer Verriegelungsplatte (302) teilweise innerhalb eines durch ein seitliches Bauelement (218) der stationären Halterung (216) definierten Kanals (304) umfasst.

15. Verfahren nach Anspruch 11, wobei das In-Eingriff-Bringen des Verriegelungsmechanismus das Einschrauben einer Schraube (602) in ein Loch in der verschiebbaren Halterung umfasst.

16. Verfahren nach einem der Ansprüche 11 bis 15, das ferner das Entfernen einer zweiten verschiebbaren Halterung (220) von einer zweiten stationären Halterung (216) umfasst, wobei die zweite verschiebbare Halterung eine zweite Reiheneinheit (106) trägt.

17. Verfahren nach einem der Ansprüche 11 bis 15, das ferner das Anpassen einer Höhe der Reiheneinheit (106) nach dem In-Eingriff-Bringen des Verriegelungsmechanismus (226; 302, 304; 402, 404; 502; 602; 702) umfasst.

## Revendications

1. Engin agricole (102) comprenant :
une barre porte-outils (104) ;
une pluralité de supports fixes (216) fixés sur la barre porte-outils, chaque support fixe comprenant au moins un élément latéral (218) orienté parallèlement à la barre porte-outils ;
une pluralité d'unités de rang (106), chaque unité de rang étant accouplée à un support coulissant (220), chaque support coulissant étant porté par et configuré pour coulisser le long de l'au moins un élément latéral (118) d'un support fixe correspondant ; et
une pluralité de mécanismes de verrouillage (226 ; 302, 304 ; 402, 404 ; 502 ; 602 ; 702), chaque mécanisme de verrouillage étant configuré pour fixer une position d'un support correspondant parmi les supports coulissants par rapport au support fixe correspondant ;
**caractérisé par** une pluralité d'actionneurs (702) configurés chacun pour déplacer un support respectif parmi les supports coulissants (220) par rapport au support fixe (216) correspondant.

2. Engin agricole (102) selon la revendication 1, dans lequel l'au moins un élément latéral (218) comprend au moins un élément choisi dans le groupe constitué d'une tige cylindrique, d'une cornière, d'une poutre en I et d'une poutre carrée.

3. Engin agricole (102) selon la revendication 2, dans lequel l'au moins un élément latéral (218) comprend au moins une tige cylindrique.

4. Engin agricole (102) selon la revendication 1, dans lequel l'au moins un élément latéral (218) comprend au moins deux éléments latéraux parallèles.

5. Engin agricole (102) selon l'une quelconque des revendications 1 à 4, dans lequel la pluralité de mécanismes de verrouillage comprend une pluralité de manchons entretoises (226).

6. Engin agricole (102) selon l'une quelconque des revendications 1 à 4, dans lequel la pluralité de mécanismes de verrouillage comprend une pluralité de plaques de verrouillage (302) configurées pour être disposées à l'intérieur de canaux de verrouillage (304) définis par l'au moins un élément latéral (218).

7. Engin agricole (102) selon l'une quelconque des revendications 1 à 4, dans lequel la pluralité de mécanismes de verrouillage comprend une pluralité de goupilles de verrouillage (402) configurées pour être disposées à l'intérieur de trous de verrouillage (404) définis par l'au moins un élément latéral (218).

8. Engin agricole (102) selon l'une quelconque des revendications 1 à 4, dans lequel la pluralité de mécanismes de verrouillage comprend une pluralité de bagues de serrage (502) configurées pour être disposées autour de l'au moins un élément latéral (218).

9. Engin agricole (102) selon l'une quelconque des revendications 1 à 4, dans lequel la pluralité de mécanismes de verrouillage comprend une pluralité de vis de verrouillage (602) configurées pour pousser l'unité de rang (106) à l'écart de l'au moins un élément latéral (218).

10. Engin agricole (102) selon l'une quelconque des revendications 1 à 4, dans lequel la pluralité de mécanismes de verrouillage comprend la pluralité d'actionneurs (702).

11. Procédé de réglage d'un espacement entre des unités de rang (106) d'un engin agricole (102), le procédé comprenant :
désactiver un mécanisme de verrouillage (226 ; 302, 304 ; 402, 404 ; 502 ; 602 ; 702) pour permettre à un support coulissant (220) portant une unité de rang (106) de se déplacer latéralement le long d'un support fixe (216) porté par une barre porte-outils (104) de l'engin agricole ;
faire coulisser latéralement le support coulissant (220) parallèlement à la barre porte-outils (104) de l'engin agricole ; et
activer le mécanisme de verrouillage (226 ; 302, 304 ; 402, 404 ; 502 ; 602 ; 702) pour fixer une position du support coulissant par rapport au support fixe ;
**caractérisé en ce que** l'étape consistant à faire coulisser latéralement le support coulissant (220) parallèlement à la barre porte-outils (104) de l'engin agricole comprend le fait de mettre en œuvre un actionneur (702) pour déplacer le support coulissant (220).

12. Procédé selon la revendication 11, dans lequel l'activation du mécanisme de verrouillage (226 ; 302, 304 ; 402, 404 ; 502 ; 702) comprend la mise en place d'un objet bloquant pour limiter un déplacement du support coulissant.

13. Procédé selon la revendication 12, dans lequel la mise en place d'un objet bloquant comprend la mise en place d'un manchon entretoise (226) sur un élément latéral (218) du support fixe (216).

14. Procédé selon la revendication 12, dans lequel la mise en place d'un objet bloquant comprend la disposition d'une plaque de verrouillage (302) partiellement à l'intérieur d'un canal (304) défini par un élément latéral (218) du support fixe (216).

15. Procédé selon la revendication 11, dans lequel l'activation du mécanisme de verrouillage comprend le vissage d'une vis (602) dans un trou dans le support coulissant.

16. Procédé selon l'une quelconque des revendications 11 à 15, comprenant en outre le fait de retirer un second support coulissant (220) d'un second support fixe (216), le second support coulissant portant une seconde unité de rang (106).

17. Procédé selon l'une quelconque des revendications 11 à 15, comprenant en outre le réglage d'une hauteur de l'unité de rang (106) après l'activation du mécanisme de verrouillage (226 ; 302, 304 ; 402, 404 ; 502 ; 602 ; 702).
